(19) Europäisches Patentamt
European Patent Office
Office européen des brevets

(11) **EP 3 170 399 B1**

(12) **EUROPEAN PATENT SPECIFICATION**

(45) Date of publication and mention
of the grant of the patent:
**20.11.2019 Bulletin 2019/47**

(21) Application number: **15822200.0**

(22) Date of filing: **16.07.2015**

(51) Int Cl.:
*A23G 3/50* (2006.01)  *A23G 3/34* (2006.01)
*A23G 3/40* (2006.01)  *A23G 3/44* (2006.01)
*A21D 13/80* (2017.01)

(86) International application number:
**PCT/JP2015/070363**

(87) International publication number:
**WO 2016/010103 (21.01.2016 Gazette 2016/03)**

(54) **BAKED CONFECTIONERY THAT SUBSTANTIALLY INCLUDES NO FLOUR**

IM WESENTLICHEN MEHLFREIE GEBACKENE SÜSSWAREN

CONFISERIE CUITE MATÉRIELLEMENT EXEMPTE DE FARINE DE CÉRÉALES

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: **17.07.2014 JP 2014146880**

(43) Date of publication of application:
**24.05.2017 Bulletin 2017/21**

(73) Proprietor: **The Nisshin OilliO Group, Ltd.**
**Tokyo 104-8285 (JP)**

(72) Inventor: **SAKURADA, Miho**
**Yokohama-shi**
**Kanagawa 239-0832 (JP)**

(74) Representative: **KATZAROV S.A.**
**European Patent Attorneys**
**12, Avenue des Morgines**
**1213 Petit-Lancy (CH)**

(56) References cited:
WO-A1-2013/186570       JP-A- 2002 180 082
JP-A- 2004 075 653       JP-A- 2009 232 805
JP-A- 2009 232 805       JP-A- 2009 524 587
JP-A- 2009 532 496       US-A1- 2005 287 264

- M. SUSAN BREWER, TRACY L. SCHMALL: "MEDIUM CHAIN TRIGLYCERIDE EFFECTS ON SENSORY AND PHYSICAL CHARACTERISTICS OF SHORTENED CAKES", Journal of Food Quality , vol. 19, no. 4 4 August 1996 (1996-08-04), pages 295-302, XP002774818, Retrieved from the Internet: URL:http://onlinelibrary.wiley.com/doi/10.1111/j.1745-4557.1996.tb00424.x/pdf [retrieved on 2017-10-16]
- NORIKO HANASAKI ET AL: "Physical Properties and Internal Structures of Baked Products Prepared with Medium-chain Triacylglycerols (MCT) and Long-chain Triacylglycerols (LCT)", JOURNAL OF COOKERY SCIENCE OF JAPAN, vol. 44, no. 3, 1 January 2011 (2011-01-01), pages 206-213, XP055357618, JP ISSN: 1341-1535, DOI: 10.11402/cookeryscience.44.206
- SUSUMU ITO ET AL.: 'A ketogenic diet for intractable childhood epilepsy' BRAIN AND NERVE vol. 63, no. 4, 2011, pages 393 - 400, XP008185488
- RANHOTRA G. S. ET AL.: 'Level of Medium-Chain Triglycerides and Their Energy Value' CEREAL CHEM. vol. 72, no. 4, 1995, pages 365 - 7, XP055396698
- MUKTI SINGH: "Effect of Flour-Oil Composite as Powdered Fat Source in Low-Fat Cake Mixes", JOURNAL OF FOOD PROCESSING & TECHNOLOGY, vol. 03, no. 05, 1 January 2012 (2012-01-01), XP055506456, DOI: 10.4172/2157-7110.1000154

**Description**

TECHNICAL FIELD

The present invention relates to a baked confectionery that substantially includes no flour. More specifically, the present invention relates to a baked confectionery that substantially includes no flour, having no oily feeling even when it has a high oil content, and having a moist texture and a melt-in-the-mouth quality free from roughness, and allowing the original flavor of the raw material to be better tasted.

BACKGROUND ART

Baked confectionery such as cookies, biscuits, doughnuts, and cake is made from flour, oils and fats, and saccharides as the main raw materials, and may be produced by further adding salts, starch, dairy products, egg products, yeast, enzyme, inflating agents, food additives and the like, if desired, to prepare a dough, which is then shaped and baked in an oven and the like. The baked confectionery is one of the most prevalent confectioneries in the world in that it comes with a variety of unique colors and textures, and can easily be prepared at general households. Moreover, the baked confectionery is one of the most consumed confectioneries in the world in that it has excellent storage stability owing to the low water content, and may also be substituted for the staple diet, if needed.

In recent years, our eating habits have become excessively luxurious to the level of satiation. In addition, westernized diets have been increasingly popular, changing our diet to carbohydrate (available carbohydrate (hereinafter also referred to as "sugar")) based menu. Carbohydrate taken from diet is metabolized into available carbohydrate in the living body, and the available carbohydrate will be then distributed via the bloodstream to serve as an energy source in cells throughout the body. However, the available carbohydrate which remains unused will soon be converted into fats, which will be accumulated in the body. Therefore, generally accepted is that an excessive intake of carbohydrate (available carbohydrate) is responsible for obesity and diabetes. Accordingly, diets having a limited amount of carbohydrate (available carbohydrate) intended for reducing the body weight, which may also be called a low-carbohydrate diet, have recently been proposed actively. A baked confectionery having a small amount of available carbohydrate could be useful in that it could be used as such a diet.

Moreover, our cells can also utilize organic compounds such as amino acid, fatty acid, ketone body (which is a general term for acetoacetic acid, 3-hydroxybutyric acid, and acetone) as energy sources under certain special environments in addition to available carbohydrate. For example, the ketone diet has been proposed as a diet for epilepsy patients. The "ketone diet" refers to a meal in which the amounts of available carbohydrate and protein are decreased, and the amount of lipid is increased, and from which the energy required for daily life can be obtained. To date, the ketone diet has been used for control epileptic seizure. In recent years, it has also been increasingly used to treat senile dementia and Alzheimer-type dementia.

For example, Patent Document 1 describes use of a nutritional composition for controlling epileptic seizure in children, the nutritional composition containing protein, lipid, and digestible carbohydrate, and having 2520 to 3080 kilo joules of energy per 100 g of dry mass, in which the weight of the lipid relative to the sum of the protein and the digestible carbohydrate is 2.7 to 3.4 : 1, and the lipid comprises a large amount of polyunsaturated fatty acid such as linolenic acid.

Further, Patent Document 2 discloses that protein aggregation in the mammalian brain can be decreased by the ketone diet therapy to treat Alzheimer-type dementia.

However, the conventional "ketone diet," which contains a considerable amount of lipid as compared with protein and available carbohydrate, suffers from considerably unpleasant consumability. This may disadvantageously prevent voluntary consumption of the ketone diet and long-term compliance of the ketone diet therapy. Accordingly, there have been demands for a product which is easy to consume without oily feeing, and from which the desired amount of energy can be obtained conveniently even when the product is a "ketone diet."

JP2009232805 discloses a dough for baked confectionery having rich chocolate flavour, moist palate feeling and favourable meltability in the mouth, and maintaining the rich chocolate flavour, the moist palate feeling and the favourable meltability in the mouth even after time passes.

WO2013/186570 discloses high fat low carbohydrate dietary compositions, such as baked goods and confectionery product to be used in ketogenic diets.

MUKTI SINGH: "Effect of Flour-Oil Composite as Powdered Fat Source in Low-Fat Cake Mixes",JOURNAL OF FOOD PROCESSING & TECHNOLOGY, vol. 03, no. 05, 1 January 2012 (2012-01-01), discloses the Effect of Flour-Oil Composite as Powdered Fat Source in Low-Fat Cake Mixes.

Patent Document 1: Japanese Unexamined Patent Application (Translation of PCT Application), Publication No. 2010-506587

Patent Document 2: Japanese Unexamined Patent Application (Translation of PCT Application), Publication No.

2008-542200

DISCLOSURE OF THE INVENTION

Problems to be Solved by the Invention

An object of the present invention is to provide a baked confectionery that substantially includes no flour, having no oily feeling even when it has a high oil content, and having a moist texture and a melt-in-the-mouth quality free from roughness, and allowing the original flavor of the raw material to be better tasted.

Means for Solving the Problems

After conducting extensive studies to obtain a baked confectionery having a high-lipid content and a low-available carbohydrate (hereinafter also referred to as "low-sugar") content which can be used as the ketone diet, the present inventors surprisingly find that a baked confectionery having no oily feeling even when it has a high oil content, and having a moist texture and a melt-in-the-mouth quality free from roughness, and allowing the original flavor of the raw material to be better tasted can be obtained by using a triacylglycerol having medium chain fatty acids as the lipid as much as possible. Then the present invention has been completed. More surprisingly, the present investors, after reducing the amount of available carbohydrate (sugar) as much as possible, find that a baked confectionery with sufficient shape stability and collapse resistance can be obtained owning to residual available carbohydrate and protein contained in raw materials of the baked confectionery even if the baked confectionery substantially includes no flour. Then the present invention has been completed.

The present invention is strictly defined by the present claims.

The present invention provides a baked confectionery comprising 40 to 80 mass% of lipid, 1 to 10 mass% of protein, and 5 to 25 mass% of available carbohydrate, wherein the lipid comprises 50 mass% or more of a triacylglycerol having a C6-12 medium-chain fatty acid as constituent fatty acids relative to the lipid, wherein the baked confectionery comprises less than 3 mass % of flour on the basis of raw material of the baked confectionery and the flour consists of one or more selected from the group consisting of strong flour, medium flour, weak flour, whole wheat flour, unpolished rice powder, rye flour, corn flour and rice flour, and wherein the lipid contains at least a powdered oil and fat and one or two or more selected from liquefied oils, margarine, fat spread and shortening.

The present invention provides a baked confectionery, in which the lipid is a combination of one or more selected from liquefied oils, margarine, fat spread, shortening, and powdered oils and fats.

The present invention provides a baked confectionery, in which the constituent fatty acids of the triacylglycerol having medium chain fatty acids consist only of a C6-12 medium-chain fatty acid.

One preferred aspect of the present invention can provide a baked confectionery, in which the constituent fatty acids of the triacylglycerol having medium chain fatty acids consist only of a C8, 10, or 12 medium-chain fatty acid.

One preferred aspect of the present invention can provide a baked confectionery comprising proteins which derive from egg white or whole egg.

One preferred aspect of the present invention can provide a baked confectionery, in which the baked confectionery comprises a sweetening agent.

One preferred aspect of the present invention can provide a baked confectionery preferably, in which the baked confectionery comprises 50 to 70 mass% of lipid, 2 to 8 mass% of protein, and 7 to 25 mass% of available carbohydrate, and more preferably comprises 55 to 70 mass% of lipid, 3 to 6 mass% of protein, and 10 to 25 mass% of available carbohydrate.

One preferred aspect of the present invention can provide a baked confectionery, in which the energy per 100 g of the baked confectionery is preferably 450 to 750 kcal, more preferably 500 to 730 kcal, and even more preferably 550 to 710 kcal.

One preferred aspect of the present invention can provide a baked confectionery, in which the ratio of the lipid (F) to the sum of the protein (P) and the available carbohydrate (C) ("F / (P + C)") in the baked confectionery is preferably 1.8 to 4.0, more preferably 2.5 to 3.5, and even more preferably 3.0 to 3.4.

One preferred aspect of the present invention can provide a baked confectionery, in which the baked confectionery is a cookie or a baked doughnut.

One preferred aspect of the present invention can provide a food product comprising the above baked confectionery.

Effects of the Invention

According to the present invention, a baked confectionery that substantially includes no flour, having no oily feeling even when it has a high oil content, and having a moist texture and a melt-in-the-mouth quality free from roughness, and allowing the original flavor of the raw material to be better tasted can simply be obtained by using a lipid in which 50 mass% or more of the lipid is a triacylglycerol having a C6-12 medium-chain fatty acid as constituent fatty acids in manufacture of the baked confectionery. The baked confectionery according to the present invention is easier to consume without oily feeling as compared with the conventional product, and thus can meet the demands of those who have not satisfied with the conventional ketone diet.

Moreover, according to the present invention, a large amount of medium chain fatty acids, which can contribute to improved nutritional support and physical endurance, can be consumed with pleasure. Therefore, the baked confectionery according to the present invention can conveniently provide the energy required for one day when used in the ketone diet.

Further, the baked confectionery according to the present invention has shape stability and collapse resistance comparable to those of common baked confectionery in spite of its high oil content. Therefore, the present invention can provide a baked confectionery with a high commercial value which has beautiful appearance and is rarely broken to cracking before reaching consumers.

In addition, the baked confectionery according to the present invention substantially includes no flour. Therefore, the present invention can provide a safe and secure baked confectionery for consumers having an allergy for flour (for example, an allergy for wheat flour and the like).

PREFERRED MODE FOR CARRYING OUT THE INVENTION

Below, the baked confectionery according to the present invention will be described step by step.

There is no particular limitation for the "baked confectionery" in the present invention as long as it is a baked confectionery that substantially includes no flour, which comprises lipid, protein, and available carbohydrate (sugar) each in a predetermined amount, and in which 50 mass % or more of the lipid is a triacylglycerol having a C6-12 medium-chain fatty acid. Specific product forms include, for example, cookies (rotary mold cookies, wire cut cookies, squeezed cookies and the like), doughnuts, baked doughnuts, biscuits, crackers, sable, pies, wafers, snack confectioneries, sponge cake, kasutera (Japanese sponge cake), pancake, financier, gateau chocolate, and the like. Among these, for example, cookies, baked doughnuts and the like which can include a large amount of lipid are preferred.

The "baked confectionery" in the present invention comprises 40 to 80 mass% of lipid, 1 to 10 mass% of protein, and 5 to 25 mass% of available carbohydrate, more preferably comprises 50 to 70 mass% of lipid, 2 to 8 mass% of protein, and 7 to 25 mass% of available carbohydrate, and even more preferably comprises 55 to 70 mass% of lipid, 3 to 6 mass% of protein, and 10 to 25 mass% of available carbohydrate. In addition to this, the above "baked confectionery" may also comprises sufficient amount of minerals, vitamins, and the like to prevent nutritional disorder. Note that these numbers in mass% are calculated relative to 100 mass% of the baked confectionery (final product).

The "baked confectionery" according to the present invention preferably contains relatively high energy so that a large amount of energy can be taken as desired at a time. Specifically, the baked confectionery contains 450 to 750 kcal of energy per 100 g of the baked confectionery. Preferably, the baked confectionery contains 500 to 730 kcal of energy per 100 g of the baked confectionery. More preferably, the baked confectionery contains 550 to 710 kcal of energy per 100 g of the baked confectionery.

The "baked confectionery" according to the present invention preferably has a high ratio of the lipid (F) to the sum of the protein (P) and the available carbohydrate (C) (hereinafter "F / (P + C)" is referred to as the "first ketone ratio") so that a large amount of ketone bodies can be produced in the body. Specifically, the first ketone ratio is preferably 1.8 to 4.0, more preferably, 2.5 to 3.5, and more preferably 3.0 to 3.4.

By the way, ketone bodies are consumed as energy when a plenty of lipid is present, but less sugar is available. Therefore, the lipid may be referred to a pro-ketone substance (K) while the available carbohydrate may be referred to an anti-ketone substance (AK) (see page 4 in Hiroshi Maruyama et al. "Ketone-Shoku no hon", Daiichi Shuppan Co., Ltd., 2010). Further, the lipid (fat) comprises 90% of K and 10% of AK, and the protein comprises 46% of K and 58% of AK (supra).

Therefore, the ketone ratio may be calculated by the following expression according to the ratio of the anti-ketone substance (AK) to the pro-ketone substance (K) (hereinafter, referred to as the "second ketone ratio") (supra).

$$K \ / \ AK \ = \ (0.9F + 0.46P) \ / \ (C + 0.1F + 0.58P)$$

Note that this expression is called the "formula of Woodyatt."

Specifically, the second ketone ratio is preferably 1.6 to 2.8, more preferably, 2.0 to 2.6, and more preferably 2.3 to 2.6 in the present invention. Ketone bodies appear to be produced in the body when the second ketone ratio is larger than 2.

The "flour" as used in the present invention refers to strong flour, medium flour, weak flour, whole wheat flour, unpolished rice powder, rye flour, corn flour, rice flour and the like. As used herein, the phrase "substantially includes no flour" means that the amount of flour is such that it is too small to impair its applicability as the ketone diet. Therefore, for the "baked confectionery" according to the present invention, flour itself is not used as a raw material, but a very small amount of flour from other raw materials is acceptable. For example, when using starch and thickening agents prepared by using wheat flour as a raw material, an incidental amount of wheat flour which will normally be introduced along with the starch and thickening agents will not be removed from the "baked confectionery" according to the present invention. As an example, the "baked confectionery that substantially includes no flour" according to the present invention has a content of flour of less than 3 mass%, preferably less than 2 mass%, more preferably less than 1 mass% on the basis of the raw materials of the baked confectionery.

The phrase "a moist texture and a melt-in-the-mouth quality free from roughness" as used in the present invention means that, for example, the baked confectionery has moist texture similar to that of a common product (with a less oil content), and does not form lumps in the mouth when consumed, and leaves no roughness when the baked confectionery is a cookie. High-lipid and low-available carbohydrate contents usually lead to a soft dough, resulting in a baked confectionery which is too soft even after being baked. The provided baked confectionery becomes a lump with roughness in the mouth. Surprisingly, a baked confectionery having a moderate hardness and chewability was able to be obtained by using a triacylglycerol having medium chain fatty acids. This is one of the important features of the present invention.

Moreover, the phrase "allowing the original flavor of the raw material to be better tasted" as used in the present invention means that, for example, the original cocoa flavor can be felt remarkably. when cocoa powder is used in the baked confectionery. The original flavor of ingredients becomes more distinguishable when a triacylglycerol having medium chain fatty acids is used. This is one of the important features of the present invention.

There is no particular limitation for the "protein" used in the present invention as long as it comprises a peptide having more than 8 amino acids. Examples of the protein include corn gluten, wheat gluten, soybean protein, wheat protein, milk protein, whey protein, animal protein (including collagen) which may be obtained from meat or fish meat, egg white, egg yolk and the like.

The amount of protein in the baked confectionery is 1 to 10 mass%, more preferably 2 to 8 mass%, and even more preferably 3 to 6 mass%.

Examples of the "available carbohydrate" used in the present invention include glucose, dextrin, lactose, sucrose, galactose, ribose, trehalose, starch, modified starch, starch syrup, powdered starch syrup and the like.

The amount of available carbohydrate in the baked confectionery is 5 to 25 mass%, more preferably 7 to 25 mass%, and even more preferably 10 to 25 mass%.

The "lipid" used in the present invention is preferably oils and fats. Example of the oils and fats include liquefied oils, margarine, fat spread, shortening, and powdered oils and fats. A combination of powdered oil and fat and one or two or more selected from liquefied oils, margarine, fat spread and shortening is used.

The amount of lipid in the baked confectionery is 40 to 80 mass %, more preferably 50 to 70 mass%, and even more preferably 55 to 70 mass%.

Further, in order to obtain a moist texture and a melt-in-the-mouth quality free from roughness in spite of a high oil content, and further, in order to allow the original flavor of the raw material to be better tasted, 50 mass% or more of the lipid in the raw materials of the baked confectionery should be a triacylglycerol having a C6-12 medium-chain fatty acid as constituent fatty acids. Moreover, the above triacylglycerol preferably accounts for 70 mass% or more of the lipid in the above baked confectionery, more preferably 80 mass% or more, and even more preferably 90 mass% or more. Furthermore, the above triacylglycerols preferably account for all of the lipid (100 mass%) contained in the baked confectionery according to the present invention.

In the present invention, oils and fats from oil-containing raw materials other than the oil and fats to be blend are included in calculation of the lipid content. For example, suppose the lipid content of a cocoa powder is about 22 mass%, the corresponding amount of lipid is to be included in a baked confectionery when the cocoa powder is blended in the baked confectionery. For example, suppose the lipid content of an almond powder is about 54 mass%, the corresponding amount of lipid is to be included in a baked confectionery when the almond powder is blended in the baked confectionery.

As described above, the lipid contained in the baked confectionery according to the present invention comprises a triacylglycerol having a C6-12 medium-chain fatty acid as constituent fatty acids. The above triacylglycerol may be a triacylglycerol in which the constituent fatty acids consist only of a C6-12 medium-chain fatty acid, or may be a triacylglycerol with mixed acid groups in which the constituent fatty acids comprises a C6-12 medium-chain fatty acid. Here, there is no particular limitation for the bonding position of each medium chain fatty acid to the glycerin.

Further, when a triacylglycerol with mixed acid groups is used, some of the constituent fatty acids may comprise a fatty acid other than those having a C6-12, for example, may comprise a long chain fatty acid. Further, the lipid used in the present invention may be a mixture in which oils and fats comprising two or more different molecular species were mixed, such as a mixture of trioctanoyl glycerol and tridecanoyl glycerol, for example. Here, the C6-12 medium-chain fatty acid is preferably straight chain saturated fatty acids.

According to another definition, a triacylglycerol in which at least one of the three fatty acids in the triacylglycerol is a C6-12 medium-chain fatty acid may account for 50 mass% or more of the lipid in the present invention. Therefore, the total amount of medium chain fatty acids contained in the oils and fats of the lipid is preferably 10 to 100 mass% in terms of fatty acid, more preferably 25 to 100 mass%, and even more preferably 40 to 100 mass%.

As the triacylglycerol comprising medium chain fatty acids contained in the baked confectionery according to the present invention, a triacylglycerol in which the consistent fatty acids consist only of a C6-12 medium-chain fatty acid (hereinafter also referred to as an "MCT") is preferred, and further, an MCT in which the constituent fatty acids consist only of a C8, 10, or 12 medium-chain fatty acid.

An MCT contained in the lipid of the baked confectionery according to the present invention can be manufactured by the publicly known method. For example, a C6-12 fatty acid and glycerol are heated to 120 to 180°C to perform dehydration condensation in the presence of catalyst or preferably in the absence of catalyst preferably under reduced pressure.

Any types of liquefied oils may be used in combination for the baked confectionery according to the present invention as long as the content of the lipid and the content of the triacylglycerol comprising a C6-12 medium-chain fatty acid in the baked confectionery satisfy the aforementioned specific ranges. They include, for example, coconut oil, palm kernel oil, palm oil, fractionated palm oil (palm olein, palm super olein, and the like), shea butter, fractionated shea oil, sal butter, fractionated sal oil, illipe butter, soybean oil, rapeseed oil, cotton seed oil, safflower oil, sunflower oil, rice oil, corn oil, sesame oil, olive oil, milk fat, cocoa butter, and the like, and mixed oils thereof, hydrogenated oils thereof, fractionated oils thereof, transesterified oils thereof, and the like. One or more of them can be used. Among these, "yashi" oil (coconut oil) which contains a large amount of lauric acid (C12:0) may suitably be used as the lipid in the present invention.

Not only liquefied oil but also margarine may be used as the lipid in the baked confectionery according to the present invention. Margarine is a processed food product, which can be obtained by adding fermented milk, salt, and vitamins (aqueous phase) to refined oils and fats, and emulsifying and kneading them together, includes water, seasonings and the like other than oils and fats. The lipid content of margarine used in the present invention is, therefore, calculated after excluding secondary materials such as water, fermented milk, seasonings, and emulsifying agents contained in margarine. Raw material oils and fats are usually hydrogenated in the manufacturing process so that it is solidified at the ordinary temperature. Margarine differs from butter in that the main raw material of margarine is vegetable or animal oils while the main raw material of butter is milk. According to the Japanese Agricultural Standards, margarine has an oils and fats content of 80% or more while fat spread has an oils and fats content of less than 80%. Hydrogenerated vegetable oils and fats and transesterified oils and fats are often used for margarine or fat spread as oil phase components, and those containing a triacylglycerol having a C6-12 medium-chain fatty acid as constituent fatty acids may suitably be used. Examples of such a product include RISETTA SOFT, a product from Nisshin OilliO Group, Ltd.

Shortening may also be used as the lipid in the baked confectionery according to the present invention. Shortening to be blended in the baked confectionery is oils and fats for kneading which are in a semi-solid (cream-like) form at the ordinary temperature, and made from vegetable oils and fats such as soybean oil and corn oil and animal oils and fats. Unlike emulsified products such as margarine and butter, shortening is generally a tasteless and odorless white material, and does not contain water and milk components, and about 100% of it comprises oils and fats components.

Powdered oils and fats may also be used as the lipid in the baked confectionery according to the present invention. Powdered oils and fats may be manufactured by any method of the spray method, the grinding method, or the coating method through steps of heat-drying, cooling solidification, freeze drying, microencapsulation and the like. In a case of a liquid oil with a low melting point, powdered oils and fats can be manufactured by, for example, mixing an aqueous phase with an oil phase, and spray drying the resulting O/W type emulsified product. Powdered oils and fats obtained in this way include available carbohydrate and protein as excipients, and the contents of that available carbohydrate and protein should be calculated separately from the lipid content. Note that preferred powdered oils and fats for the present invention include, for example, a Nissin MCT Powder, a product from Nisshin OilliO Group, Ltd.

There is no particular limitation for the "other raw materials" used for the baked confectionery according to the present invention as long as they are commonly blended in a baked confectionery. They include, for example, almond powder, cocoa powder, chocolate, chocolate tip, caramel, cheese, nuts, and honey, and processed goods thereof; emulsifying agents such as polyglycerin fatty acid ester, sucrose fatty acid ester, sorbitan fatty acid ester, monoglyceride, and organic acid monoglyceride; vitamins such as vitamin A, vitamin B, vitamin E, and vitamin C; milk products such as whole milk powder, skim milk powder, milk powder, and creaming powder; minerals such as iron and calcium; dietary fibers such as indigestible dextrin, polydextrose, carrageenan, and cellulose; sugar alcohols such as erythritol; sweetening agents such as sucralose, thaumatin, and neotame; organic acids such as succinic acid, malic acid, and citric acid; various seasonings such as salt and sodium bicarbonate; inflating agents such as sodium bicarbonate and baking powder; other flavoring agents and coloring agents; water; cow's milk; soybean milk; fruit juice; vegetable juice; and the like.

Further, food products comprising the baked confectionery according to the present invention are within the scope of the present invention. They include, for example, food products in which cream, jam, marshmallow, bean paste and the like are wrapped or sandwiched by the baked confectionery. Further, they include food products in which chocolate, sugar, egg white, soy sauce, oils and fats, and the like are applied or coated on a surface of the baked confectionery to give complex tastes.

There is no particular limitation for the method of manufacturing the baked confectionery according to the present invention as long as it is a conventional method, including, for example, bake cooking in an oven and the like, microwave cooking in a microwave oven and the like, and superheated steam cooking and the like. The baked confectionery according to the present invention may also be manufactured by blending a lipid by the publicly known method, the lipid comprising a triacylglycerol having a C6-12 medium-chain fatty acid. Specifically, other raw materials are first added to a lipid comprising a triacylglycerol having a C6-12 medium-chain fatty acid, and mixing with an appropriate means to prepare a dough. Then, the dough obtained is shaped and baked to manufacture a baked confectionery.

EXAMPLES

Next, the present invention will be described in more detail with reference to Examples and Comparative Examples, but the present invention shall not in any way be limited to these.

The unit "%" as used hereafter refers to "mass%" unless otherwise stated.

Further, the contents of lipid, protein, and available carbohydrate are calculated as mass% relative to 100 mass% of the baked confectionery. Moreover, energy is calculated as kilocalories per 100 g of the baked confectionery. Furthermore, the "ketone ratio" is calculated by the expression "lipid / (protein + available carbohydrate)" (the first ketone ratio), or calculated by the formula of Woodyatt (the second ketone ratio) based on the contents of lipid, protein, and available carbohydrate contained in the baked confectionery.

<Analytical method>

The content of a triacylglycerol was measured in accordance with AOCS Ce5-86.

The content of each fatty acid was measured in accordance with AOCS Celf-96.

Hereafter, a triacylglycerol having a C6-12 medium-chain fatty acid are abbreviated as "MTG." Further, among these, a triacylglycerol in which the constituent fatty acids consist only of a C6-12 medium-chain fatty acid is abbreviated as an "MCT."

<Oils and fats used>

[MCT 1]: An MCT (an in-house product C10R from Nisshin OilliO Group, Ltd.) in which the fatty acids of the triacylglycerol were n-octanoic acid (C8) and n-decanoic acid (C10) with a mass ratio of 30:70 was used as MCT 1.
[MCT 2]: An MCT (an in-house product O.D.O. from Nisshin OilliO Group, Ltd.) in which the fatty acids of the triacylglycerol were n-octanoic acid (C8) and n-decanoic acid (C10) with a mass ratio of 75:25 was used as MCT 2.

[Vegetable oils and fats 1]: A hardened coconut oil (Nisshin OilliO Group, Ltd., the content of medium chain fatty acids among the fatty acids of the triacylglycerol was 12.3 mass% (breakdown: the content of n-octanoic acid was 8.0 mass%; the content of n-decanoic acid was 4.3 mass%); the content of MTG was 53.2 mass%; the content of MCT was 0 mass%) was used as Vegetable oils and fats 1.
[Vegetable oils and fats 2]: An extremely hardened high-erucic rapeseed oil (Yokozeki Oil and Fat Industries Co., Ltd., the content of MTG was 0 mass%) was used as Vegetable oils and fats 2.
[Vegetable oils and fats 3]: A rapeseed oil (Nisshin OilliO Group, Ltd., the content of MTG was 0 mass%; the content of saturated fatty acid was 6 mass%; the content of monounsaturated fatty acid was 62 mass%; the content of polyunsaturated fatty acid was 30 mass%; the content of oleic acid was 60 mass%; the content of linolenic acid was 10 mass%) was used as Vegetable oils and fats 3.
[Vegetable oils and fats 4]: An intermediate melting point fraction of palm (Nisshin OilliO Group, Ltd., the content of MTG was 0 mass%) was used as Vegetable oils and fats 4.

[Transesterified oil 1]: A transesterified oil in which a mixed oil of 50 parts by mass of an extremely hardened palm stearin oil and 50 parts by mass of an extremely hardened palm kernel olein oil was chemically transesterificated (the content of medium chain fatty acids among the fatty acids of the triacylglycerol was 3.2 mass% (breakdown: n-octanoic acid was 2.0 mass%; the content of n-decanoic acid was 1.2 mass%); the content of MTG was 13.2 mass%; the content of MCT was 0 mass%) was used as Transesterified oil 1.

[Transesterified oil 2]: A transesterified oil in which palm olein was chemically transesterified (the content of MTG was 0 mass%) was used as Transesterified oil 2.

<Preparation of margarine>

Oil and aqueous phases were prepared according to the compositions shown in Table 1, and then rapidly cooled for plasticization with a combinator by the conventional method to prepare a medium chain margarine and a long chain margarine. The contents of MTG in the lipids were shown in Table 1.

[Table 1]

| Table 1 Composition of margarine and content of MTG | | | (Unit: mass %) |
|---|---|---|---|
| | | Medium chain margarine | Long chain margarine |
| Oil phase | MCT 1 | 41.7 | - |
| | Vegetable oils and fats 1 | 32.9 | - |
| | Vegetable oils and fats 2 | 0.5 | 0.5 |
| | Vegetable oils and fats 3 | - | 41.7 |
| | Vegetable oils and fats 4 | - | 20.4 |
| | Transesterified oil 1 | 8.3 | 8.3 |
| | Transesterified oil 2 | - | 12.5 |
| | Emulsifying agent | 0.4 | 0.4 |
| Aqueous phase | Water | 16.0 | 16.0 |
| | Salt | 0.2 | 0.2 |
| Total | | 100.0 | 100.0 |
| MTG content in lipid | | 72.3% | 1.3% |

<Manufacture of powdered oils and fats>

Powdered oils and fats were manufactured by the conventional method according to the compositions shown in Table 2 below. Specifically, MCT 2 or Vegetable oils and fats 3 as shown in the compositions below was first used as an oil phase, and then thoroughly mixed with an aqueous phase prepared by adding water to modified starch and dextrin to produce an O/W type emulsified material. Then the above emulsified material was dried with hot air by the spray-drying method to obtain powdered oils and fats. Note that the powdered oils and fats of MCT 2 is called an "MCT powder," and the powdered oils and fats of Vegetable oils and fats 3 (rapeseed oil) is called an "LCT powder."

[Table 2]

| [Table 2] Composition of powdered oils and fats and content of MTG | | | | |
|---|---|---|---|---|
| | MCT powder | | LCT powder | |
| Composition of raw materials | (g) | (%) | (g) | (%) |
| MCT 2 | 75.0 | 75.0 | | |
| Vegetable oils and fats 3 | | | 75.0 | 75.0 |
| Modified starch | 10.0 | 10.0 | 10.0 | 10.0 |
| Dextrin | 15.0 | 15.0 | 15.0 | 15.0 |
| Total | 100.0 | 100.0 | 100.0 | 100.0 |
| MTG content of lipid | 100% | | 0% | |

[Example 1]

<Manufacture of almond cookies>

Almond cookies of Example 1 and Comparative Example 1 were manufactured by the conventional method according to the compositions shown in Table 3 below. Specifically, the MCT powder or LCT powder, a sweetening agent SUGAR CUT (trade mark) (Asadaame Co., Ltd.), an almond powder, egg white, and sodium bicarbonate were added to and mixed thoroughly with a medium chain margarine or long chain margarine according to the compositions shown below to obtain a cookie dough. It was rolled to a thickness of 3 mm, and cut out with a 3 cm round cutter, and then baked for 15 minutes in a 150ºC oven to produce cookies.

[Table 3]

| [Table 3] Composition and evaluation of almond cookie | | | | |
|---|---|---|---|---|
| | Example 1 | | Comparative Example 1 | |
| Composition of raw materials | (g) | (%) | (g) | (%) |
| MCT powder | 100 | 47.9 | - | - |
| LCT powder | - | - | 100 | 47.9 |
| Medium chain margarine | 25.0 | 12.0 | - | - |
| Long chain margarine | - | - | 25.0 | 12.0 |
| Sweetening agent | 15.0 | 7.2 | 15.0 | 7.2 |
| Almond powder | 30.0 | 14.4 | 30.0 | 14.4 |
| Egg white | 37.5 | 18.0 | 37.5 | 18.0 |
| Sodium bicarbonate | 1.25 | 0.6 | 1.25 | 0.6 |
| Total | 208.75 | 100.0 | 208.75 | 100.0 |
| MTG content in lipid | 56.6% | | 0.16% | |
| Lipid | 59.26 | | 59.26 | |
| Protein | 5.13 | | 5.13 | |
| Available carbohydrate | 22.33 | | 22.33 | |
| Energy | 646.25 | | 646.25 | |
| First ketone ratio | 2.16 | | 2.16 | |
| Second ketone ratio | 1.78 | | 1.78 | |
| Evaluation results | | | | |
| Oily feeling | Good | | Bad | |
| Texture | Good | | Poor | |
| Melt-in-the-mouth | Good | | Poor | |
| Flavor | Moderately Good | | Bad | |

[Example 2]

<Manufacture of cocoa cookies>

Cocoa cookies of Example 2 and Comparative Example 2 were manufactured by the conventional method according to the compositions shown in Table 4 below. Specifically, the MCT powder or LCT powder, a sweetening agent SUGAR CUT (trade mark) (Asadaame Co., Ltd.), cocoa, egg white, and sodium bicarbonate were first added to and mixed thoroughly with a medium chain margarine or long chain margarine according to the compositions shown below to obtain a cookie dough. It was rolled to a thickness of 3 mm, and cut out with a 3 cm round cutter, and then baked for 15 minutes in a 150ºC oven to produce cookies.

[Table 4]

| [Table 4] Composition and evaluation of cocoa cookie | | | | |
|---|---|---|---|---|
| | Example 2 | | Comparative Example 2 | |
| Composition of raw materials | (g) | (%) | (g) | (%) |
| MCT powder | 100 | 52.2 | - | - |
| LCT powder | - | - | 100 | 52.2 |
| Medium chain margarine | 25.0 | 13.1 | - | - |
| Long chain margarine | - | - | 25.0 | 13.1 |
| Sweetening agent | 15.0 | 7.8 | 15.0 | 7.8 |
| cocoa | 12.5 | 6.5 | 12.5 | 6.5 |
| Egg white | 37.5 | 19.6 | 37.5 | 19.6 |
| Sodium bicarbonate | 1.25 | 0.7 | 1.25 | 0.7 |
| Total | 191.25 | 100.0 | 191.25 | 100.0 |
| MTG content in lipid | 61.7% | | 0.17% | |
| Lipid | 56.79 | | 56.79 | |
| Protein | 3.68 | | 3.68 | |
| Available carbohydrate | 24.03 | | 24.03 | |
| Energy | 620.41 | | 620.41 | |
| First ketone ratio | 2.05 | | 2.05 | |
| Second ketone ratio | 1.66 | | 1.66 | |
| Evaluation results | | | | |
| Oily feeling | Good | | Bad | |
| Texture | Good | | Poor | |
| Melt-in-the-mouth | Good | | Poor | |
| Flavor | Good | | Poor | |

[Example 3]

<Manufacture of mini baked doughnuts in gateau chocolate style>

Baked doughnuts of Example 3 and Comparative Example 3 were manufactured by the conventional method according to the compositions shown in Table 5 below. Specifically, a powder, margarine, and sodium bicarbonate were first mixed according to the compositions shown below, to which whole egg, and then cocoa powder was mixed to obtain a doughnut dough. The dough in an amount of 3.5 g was squeezed into a ring-shaped mold, and baked for 17 minutes in a 150ºC oven to manufacture the following baked doughnuts.

[Table 5]

| [Table 5] Composition and evaluation of mini baked doughnut in gateau chocolate style | | | | |
|---|---|---|---|---|
| | Example 3 | | Comparative Example 3 | |
| Composition of raw materials | (g) | (%) | (g) | (%) |
| MCT powder | 100 | 50.5 | - | - |
| LCT powder | - | - | 100 | 50.5 |
| Medium chain margarine | 20.0 | 10.1 | - | - |

(continued)

| [Table 5] Composition and evaluation of mini baked doughnut in gateau chocolate style | | | | |
|---|---|---|---|---|
| | Example 3 | | Comparative Example 3 | |
| Composition of raw materials | (g) | (%) | (g) | (%) |
| Long chain margarine | - | - | 20.0 | 10.1 |
| Sweetening agent | 16.0 | 8.1 | 16.0 | 8.1 |
| cocoa | 10.0 | 5.1 | 10.0 | 5.1 |
| Whole egg | 50.0 | 25.3 | 50.0 | 25.3 |
| Sodium bicarbonate | 2.0 | 1.0 | 2.0 | 1.0 |
| Total | 198.0 | 100.0 | 198.0 | 100.0 |
| MTG content in lipid | 57.8% | | 0.13% | |
| Lipid | 54.57 | | 54.57 | |
| Protein | 4.49 | | 4.49 | |
| Available carbohydrate | 23.28 | | 23.28 | |
| Energy | 602.69 | | 602.69 | |
| First ketone ratio | 1.97 | | 1.97 | |
| Second ketone ratio | 1.63 | | 1.63 | |
| Evaluation results | | | | |
| Oily feeling | Good | | Bad | |
| Texture | Good | | Poor | |
| Melt-in-the-mouth | Good | | Poor | |
| Flavor | Good | | Poor | |

[Example 4]

<Manufacture of puff cookies in financier style>

Puff cookies in the financier style of Example 4 and Comparative Example 4 were manufactured by the conventional method according to the compositions shown in Table 6 below. Specifically, a powder and margarine were first mixed according to the compositions shown below, to which egg white, and then almond powder were added and mixed to obtain a dough. The dough in an amount of 4 g was squeezed into a heart-shaped mold, and baked for 30 minutes in a 150ºC oven to manufacture the following puff cookies in the financier style.

[Table 6]

| [Table 6] Composition and evaluation of puff cookie in financier style | | | | |
|---|---|---|---|---|
| | Example 4 | | Comparative Example 4 | |
| Composition of raw materials | (g) | (%) | (g) | (%) |
| MCT powder | 100 | 45.4 | - | - |
| LCT powder | - | - | 100 | 45.4 |
| Medium chain margarine | 40.0 | 18.2 | - | - |
| Long chain margarine | - | - | 40.0 | 18.2 |
| Sweetening agent | 10.0 | 4.5 | 10.0 | 4.5 |
| Almond powder | 20.0 | 9.1 | 20.0 | 9.1 |

(continued)

| [Table 6] Composition and evaluation of puff cookie in financier style | | | | |
|---|---|---|---|---|
| | Example 4 | | Comparative Example 4 | |
| Composition of raw materials | (g) | (%) | (g) | (%) |
| Egg white | 50.0 | 22.7 | 50.0 | 22.7 |
| Total | 220.0 | 100.0 | 220.0 | 100.0 |
| MTG content in lipid | 58.6% | | 0.24% | |
| Lipid | 63.61 | | 63.61 | |
| Protein | 5.32 | | 5.32 | |
| Available carbohydrate | 23.76 | | 23.76 | |
| Energy | 695.19 | | 695.19 | |
| First ketone ratio | 2.19 | | 2.19 | |
| Second ketone ratio | 1.80 | | 1.80 | |
| Evaluation results | | | | |
| Oily feeling | Good | | Bad | |
| Texture | Good | | Poor | |
| Melt-in-the-mouth | Good | | Poor | |
| Flavor | Moderately Good | | Bad | |

[Example 5]

<Manufacture of improved almond cookies>

Improved almond cookies of Example 5 and Comparative Example 5 were produced according to the compositions shown in Table 7 below. In order to increase the ketone ratio, MIRASEE (trade mark) (DSP Gokyo Food & Chemical Co., Ltd.) was used according to the compositions shown in Table 7 below in the place of a sweeting agent SUGAR CUT (trade mark) in the compositions shown in Table 3 of Example 1 above. Other components were adjusted according to this change. Others were performed as in Example 1.

[Table 7]

| [Table 7] Composition and evaluation of almond cookie | | | | |
|---|---|---|---|---|
| | Example 5 | | Comparative Example 5 | |
| Composition of raw materials | (g) | (%) | (g) | (%) |
| MCT powder | 100 | 53.0 | - | - |
| LCT powder | - | - | 100 | 53.0 |
| Medium chain margarine | 25.0 | 13.2 | - | - |
| Long chain margarine | - | - | 25.0 | 13.2 |
| Sweetening agent | 0.10 | 0.05 | 0.10 | 0.05 |
| Almond powder | 37.5 | 19.9 | 37.5 | 19.9 |
| Egg white | 25.0 | 13.2 | 25.0 | 13.2 |
| Sodium bicarbonate | 1.25 | 0.7 | 1.25 | 0.7 |
| Total | 188.85 | 100.0 | 188.85 | 100.0 |
| MTG content in lipid | 62.5% | | 0.17% | |

(continued)

| [Table 7] Composition and evaluation of almond cookie | | | | |
|---|---|---|---|---|
| | Example 5 | | Comparative Example 5 | |
| Composition of raw materials | (g) | (%) | (g) | (%) |
| Lipid | 67.88 | | 67.88 | |
| Protein | 5.71 | | 5.71 | |
| Available carbohydrate | 16.31 | | 16.31 | |
| Energy | 703.26 | | 703.26 | |
| First ketone ratio | 3.08 | | 3.08 | |
| Second ketone ratio | 2.41 | | 2.41 | |
| Evaluation results | | | | |
| Oily feeling | Good | | Bad | |
| Texture | Good | | Poor | |
| Melt-in-the-mouth | Good | | Poor | |
| Flavor | Good | | Poor | |

[Example 6]

<Manufacture of cocoa cookies>

Improved cocoa cookies of Example 6 and Comparative Example 6 were produced according to the compositions shown in Table 8 below. In order to increase the ketone ratio, MIRASEE (trade mark) (DSP Gokyo Food & Chemical Co., Ltd.) was used according to the compositions shown in Table 8 below in the place of a sweeting agent SUGAR CUT (trade mark) in the compositions shown in Table 4 of Example 2 above. Other components were adjusted according to this change. Others were performed as in Example 2.

[Table 8]

| [Table 8] Composition and evaluation of cocoa cookie | | | | |
|---|---|---|---|---|
| | Example 6 | | Comparative Example 6 | |
| Composition of raw materials | (g) | (%) | (g) | (%) |
| MCT powder | 100 | 61.0 | - | - |
| LCT powder | - | - | 100 | 61.0 |
| Medium chain margarine | 25.0 | 15.3 | - | - |
| Long chain margarine | - | - | 25.0 | 15.3 |
| Sweetening agent | 0.08 | 0.05 | 0.08 | 0.05 |
| cocoa | 12.5 | 7.6 | 12.5 | 7.6 |
| Egg white | 25.0 | 15.3 | 25.0 | 15.3 |
| Sodium bicarbonate | 1.25 | 0.76 | 1.25 | 0.76 |
| Total | 163.8 | 100.0 | 163.8 | 100.0 |
| MTG content in lipid | 72.1% | | 0.20% | |
| Lipid | 66.26 | | 66.26 | |
| Protein | 3.42 | | 3.42 | |
| Available carbohydrate | 17.97 | | 17.97 | |

(continued)

| [Table 8] Composition and evaluation of cocoa cookie | | | | |
|---|---|---|---|---|
| | Example 6 | | Comparative Example 6 | |
| Composition of raw materials | (g) | (%) | (g) | (%) |
| Energy | 681.08 | | 681.08 | |
| First ketone ratio | 3.10 | | 3.10 | |
| Second ketone ratio | 2.30 | | 2.30 | |
| Evaluation results | | | | |
| Oily feeling | Good | | Bad | |
| Texture | Good | | Poor | |
| Melt-in-the-mouth | Good | | Poor | |
| Flavor | Good | | Poor | |

[Example 7]

<Manufacture of mini baked doughnuts in gateau chocolate style>

Mini baked doughnuts in the improved gateau chocolate style of Example 7 and Comparative Example 7 were manufactured according to the compositions shown in Table 9 below. In order to increase the ketone ratio, MIRASEE (trade mark) (DSP Gokyo Food & Chemical Co., Ltd.) was used according to the compositions shown in Table 9 below in the place of a sweeting agent SUGAR CUT (trade mark) in the compositions shown in Table 5 of Example 3 above. Other components were adjusted according to this change. Others were performed as in Example 3.

[Table 9]

| [Table 9] Composition and evaluation of mini baked doughnut in gateau chocolate style | | | | |
|---|---|---|---|---|
| | Example 7 | | Comparative Example 7 | |
| Composition of raw materials | (g) | (%) | (g) | (%) |
| MCT powder | 100 | 52.1 | - | - |
| LCT powder | - | - | 100 | 52.1 |
| Medium chain margarine | 40.0 | 20.8 | - | - |
| Long chain margarine | - | - | 40.0 | 20.8 |
| Sweetening agent | 0.10 | 0.05 | 0.10 | 0.05 |
| cocoa | 10.0 | 5.20 | 10.0 | 5.20 |
| Whole egg | 40.0 | 20.8 | 40.0 | 20.8 |
| Sodium bicarbonate | 2.0 | 1.04 | 2.0 | 1.04 |
| Total | 192.0 | 100.0 | 192.0 | 100.0 |
| MTG content in lipid | 67.1% | | 0.27% | |
| Lipid | 65.67 | | 65.67 | |
| Protein | 4.00 | | 4.00 | |
| Available carbohydrate | 15.19 | | 15.19 | |
| Energy | 671.02 | | 671.02 | |
| First ketone ratio | 3.42 | | 3.42 | |
| Second ketone ratio | 2.53 | | 2.53 | |

(continued)

| Evaluation results | | |
|---|---|---|
| Oily feeling | Good | Bad |
| Texture | Good | Poor |
| Melt-in-the-mouth | Good | Poor |
| Flavor | Good | Poor |

[Example 8]

<Manufacture of puff cookies in financier style>

Puff cookies in the financier style of Example 8 and Comparative Example 8 were manufactured according to the compositions shown in Table 10 below. In order to increase the ketone ratio, MIRASEE (trade mark) (DSP Gokyo Food & Chemical Co., Ltd.) was used according to the compositions shown in Table 10 below in the place of a sweeting agent SUGAR CUT (trade mark) in the compositions shown in Table 6 of Example 4 above. Other components were adjusted according to this change. A flavoring agent was used. Others were performed as in Example 4.

[Table 10]

| [Table 10] Composition and evaluation of puff cookie in financier style | | | | |
|---|---|---|---|---|
| | Example 8 | | Comparative Example 8 | |
| Composition of raw materials | (g) | (%) | (g) | (%) |
| MCT powder | 100 | 47.6 | - | - |
| LCT powder | - | - | 100 | 47.6 |
| Medium chain margarine | 40.0 | 19.0 | - | - |
| Long chain margarine | - | - | 40.0 | 19.0 |
| Sweetening agent | 0.05 | 0.02 | 0.05 | 0.02 |
| Almond powder | 20.0 | 9.5 | 20.0 | 9.5 |
| Egg white | 50.0 | 23.8 | 50.0 | 23.8 |
| Flavoring agent | 0.2 | 0.10 | 0.2 | 0.10 |
| Total | 210.1 | 100.0 | 210.1 | 100.0 |
| MTG content in lipid | 61.3% | | 0.25% | |
| Lipid | 65.99 | | 65.99 | |
| Protein | 5.11 | | 5.11 | |
| Available carbohydrate | 14.72 | | 14.72 | |
| Energy | 679.28 | | 679.28 | |
| First ketone ratio | 3.33 | | 3.33 | |
| Second ketone ratio | 2.54 | | 2.54 | |
| Evaluation results | | | | |
| Oily feeling | Good | | Bad | |
| Texture | Good | | Poor | |
| Melt-in-the-mouth | Good | | Poor | |
| Flavor | Good | | Poor | |

<Evaluation of baked confectionery>

The baked confectioneries from Examples and Comparative Examples manufactured as described above were evaluated for texture and the like in accordance with the following valuation methods.

<Method of evaluating baked confectionery>

(1) Method of evaluating oily feeling

A panel of 10 trained personnels performed general evaluation in accordance with the following criteria.
Good: No oily feeling
Moderately Good: Slightly oily
Poor: Somewhat oily
Bad: oily

(2) Method of evaluating texture

A panel of 10 trained personnels performed general evaluation in accordance with the following criteria.
Good: Texture is moist.
Moderately Good: Texture is somewhat moist, but not good enough.
Poor: Texture is much less moist.
Bad: Texture is not moist.

(3) Method of evaluating melt-in-the-mouth

A panel of 10 trained personnels performed general evaluation in accordance with the following criteria.
Good: No lumps in the mouth with smooth texture
Moderately Good: Hard to become the lumps in the mouth with moderately smooth texture
Poor: Some lumps in the mouth with slight roughness
Bad: Easy to become the lumps in the mouth with roughness (4) Method of evaluating flavor
A panel of 10 trained personnels performed general evaluation in accordance with the following criteria.
Good: Original flavor of ingredients is felt remarkably.
Moderately Good: Original flavor of ingredients is moderately distinguishable.
Poor: Original flavor of ingredients is only slightly distinguishable.
Bad: Original flavor of ingredients is not distinguishable.
As clearly shown in Tables 3 to 10, baked confectioneries that substantially includes no flour, having no oily feeling even when they had a high oil content, and having a moist texture and a melt-in-the-mouth quality free from roughness, and allowing the original flavor of the raw material to be better tasted were able to be obtained by using a lipid in which a triacylglycerol having a C6-12 medium-chain fatty acid as constituent fatty acids accounted for 50 mass% or more of the lipid. In particular, the improved versions from Examples 4 to 8 each have a sufficiently high ketone ratio, and thus can likely lead to favorable generation of ketone bodies. Therefore, they can preferably be used for the ketone diet.

**Claims**

1. A baked confectionery comprising 40 to 80 mass% of lipid, 1 to 10 mass% of protein, and 5 to 25 mass% of available carbohydrate,

   wherein the lipid comprises 50 mass% or more of a triacylglycerol having a C6-12 medium-chain fatty acid as constituent fatty acids relative to the lipid,
   wherein the baked confectionery comprises less than 3 mass % of flour on the basis of raw materials of the baked confectionery and the flour consists of one or more selected from the group consisting of strong flour, medium flour, weak flour, whole wheat flour, unpolished rice powder, rye flour, corn flour and rice flour, and
   wherein the lipid contains at least a powdered oil and fat and one or two or more selected from liquefied oils, margarine, fat spread and shortening.

2. The baked confectionery according to claim 1, wherein the constituent fatty acids of the triacylglycerol having medium chain fatty acids consist only of a C6-12 medium-chain fatty acid.

3. The baked confectionery according to any one of claims 1 to 2, wherein the constituent fatty acids of the triacylglycerol having medium chain fatty acids consist only of a C8, 10, or 12 medium-chain fatty acid.

4. The baked confectionery according to any one of claims 1 to 3, wherein the protein comprising proteins which derive from egg white or whole egg.

5. The baked confectionery according to any one of claims 1 to 4, wherein the baked confectionery comprises a sweeting agent.

6. The baked confectionery according to any one of claims 1 to 5, wherein the baked confectionery preferably comprises 50 to 70 mass% of lipid, 2 to 8 mass% of protein, and 7 to 25 mass% of available carbohydrate, and more preferably comprises 55 to 70 mass% of lipid, 3 to 6 mass% of protein, and 10 to 25 mass% of available carbohydrate.

7. The baked confectionery according to any one of claims 1 to 6, wherein the energy per 100 g of the baked confectionery is preferably 450 to 750 kcal, more preferably 500 to 730 kcal, and even more preferably 550 to 710 kcal.

8. The baked confectionery according to any one of claims 1 to 7, wherein the ratio of the lipid (F) to the sum of the protein (P) and the available carbohydrate (C) ("F / (P + C)") in the baked confectionery is preferably 1.8 to 4.0, more preferably 2.5 to 3.5, and even more preferably 3.0 to 3.4.

9. The baked confectionery according to any one of claims 1 to 8, wherein the baked confectionery is a cookie or a baked doughnut.

10. A food product in which one selected from cream, jam, marshmallow and bean paste is wrapped or sandwiched by the baked confectionery according to any one of claims 1 to 9.

11. A food product, wherein a surface of the baked confectionery according to any one of claims 1 to 9 is applied or coated with one selected from the group consisting of chocolate, sugar, egg white, soy sauce and oils and fats.

**Patentansprüche**

1. Gebackene Süßware, umfassend 40 bis 80 Massen-% Lipid, 1 bis 10 Massen-% Protein und 5 bis 25 Massen-% verfügbare Kohlehydrate,
wobei das Lipid 50 Masse-% oder mehr eines Triacylglycerins mit einer mittelkettigen Fettsäure mit C6-12 als grundlegende Fettsäuren in Bezug auf das Lipid enthält,
wobei die gebackene Süßware weniger als 3 Massen-% Mehl bezogen auf die Rohmaterialien der gebackenen Süßware umfasst, und das Mehl aus einem oder mehreren ausgewählt aus der Gruppe bestehend aus starkem Mehl, mittelstarkem Mehl, schwachem Mehl, Pulver aus nicht poliertem Reis, Roggenmehl, Maismehl und Reismehl besteht, und
wobei das Lipid zumindest ein pulverförmiges Öl und Fett und ein oder zwei oder mehr ausgewählt aus verflüssigten Ölen, Margarine, Streichfett und ungehärtetes Pflanzenfett enthält.

2. Gebackene Süßware nach Anspruch 1, wobei die grundlegenden Fettsäuren des Triacylglycerins mit mittelkettigen Fettsäuren aus nur einer mittelkettigen Fettsäure mit C6-12 bestehen.

3. Gebackene Süßware nach Ansprüche 1 bis 2, wobei die grundlegenden Fettsäuren des Triacylglycerins mit mittelkettigen Fettsäuren aus nur einer mittelkettigen Fettsäure mit C8, C10 oder C-12 bestehen.

4. Gebackene Süßware nach einem der Ansprüche 1 bis 3, wobei das Protein Proteine umfasst, die aus Eiweiß oder Vollei stammen.

5. Gebackene Süßware nach einem der Ansprüche 1 bis 4, wobei die gebackene Süßware ein Süßungsmittel umfasst.

6. Gebackene Süßware nach einem der Ansprüche 1 bis 5, wobei die gebackene Süßware vorzugsweise 50 bis 70 Massen-% Lipid, 2 bis 8 Massen-% Protein und 7 bis 25 Massen-% verfügbare Kohlehydrate umfasst, und noch bevorzugter 55 bis 70 Massen-% Lipid, 3 bis 6 Massen-% Protein und 10 bis 25 Massen-% verfügbare Kohlehydrate umfasst.

7. Gebackene Süßware nach einem der Ansprüche 1 bis 6, wobei der Energiegehalt je 100 g der gebackenen Süßware vorzugsweise 450 bis 750 kcal, noch bevorzugter 500 bis 730 kcal und sogar noch bevorzugter 550 bis 710 kcal beträgt.

8. Gebackene Süßware nach einem der Ansprüche 1 bis 7, wobei das Verhältnis von Lipid (F) zur Summe des Proteins (P) und der verfügbaren Kohlehydrate (C) ("F / (P + C)") in der gebackenen Süßware vorzugsweise 1,8 bis 4,0, noch bevorzugter 2,5 bis 3,5 und sogar noch bevorzugter 3,0 bis 3,4 beträgt.

9. Gebackene Süßware nach einem der Ansprüche 1 bis 8, wobei die gebackene Süßware ein Keks oder ein gebackener Doughnut ist.

10. Nahrungsmittelprodukt, bei dem ein aus Creme, Marmelade, Marshmallow und Bohnenpaste ausgewähltes Element in die gebackene Süßware nach einem der Ansprüche 1 bis 9 zwischengelegt oder in diese eingehüllt ist.

11. Nahrungsmittelprodukt, bei dem eine Oberfläche der gebackenen Süßware nach einem der Ansprüche 1 bis 9 mit einem Element ausgewählt aus der Gruppe bestehend aus Schokolade, Zucker, Eiweiß, Sojasoße und Ölen und Fetten belegt oder beschichtet ist.


**Revendications**

1. Confiserie cuite comprenant 40 à 80% en masse de lipide, 1 à 10% en masse de protéine et 5 à 25% en masse de glucide disponible,
   dans laquelle le lipide comprend 50% en masse ou plus d'un triacylglycérol ayant un acide gras à chaîne moyenne en C6 à C12 en tant qu'acides gras constitutifs par rapport au lipide,
   dans laquelle la confiserie cuite comprend moins de 3% en masse de farine sur la base de matières premières de la confiserie cuite et la farine consiste en un ou plusieurs élément(s) choisi(s) dans le groupe constitué de farine forte, de farine moyenne, de farine faible, de farine de blé entier, de poudre de riz non poli, de farine de seigle, de farine de maïs et de farine de riz, et
   dans laquelle le lipide contient au moins une huile et une matière grasse en poudre et un élément ou deux ou plus choisi(s) parmi des huiles liquéfiées, la margarine, une pâte à tartiner à base de matière grasse et une graisse alimentaire.

2. Confiserie cuite selon la revendication 1, dans laquelle les acides gras constitutifs du triacylglycérol ayant des acides gras à chaîne moyenne consistent uniquement en un acide gras à chaîne moyenne en C6 à C12.

3. Confiserie cuite selon l'une quelconque des revendications 1 à 2, dans laquelle les acides gras constitutifs du triacylglycérol ayant des acides gras à chaîne moyenne consistent uniquement en un acide gras à chaîne moyenne en C8, C10 ou C12.

4. Confiserie cuite selon l'une quelconque des revendications 1 à 3, dans laquelle la protéine comprend des protéines qui dérivent du blanc d'œuf ou de l'œuf entier.

5. Confiserie cuite selon l'une quelconque des revendications 1 à 4, dans laquelle la confiserie cuite comprend un agent édulcorant.

6. Confiserie cuite selon l'une quelconque des revendications 1 à 5, dans laquelle la confiserie cuite comprend de préférence 50 à 70% en masse de lipide, 2 à 8% en masse de protéine, et 7 à 25% en masse de glucide disponible, et plus préférablement comprend 55 à 70% en masse de lipide, 3 à 6% en masse de protéine et 10 à 25% en masse de glucide disponible.

7. Confiserie cuite selon l'une quelconque des revendications 1 à 6, dans laquelle l'énergie pour 100 g de la confiserie cuite est comprise de préférence entre 450 et 750 kcal, plus préférablement entre 500 et 730 kcal et encore plus préférablement entre 550 et 710 kcal.

**8.** Confiserie cuite selon l'une quelconque des revendications 1 à 7, dans laquelle le rapport du lipide (F) sur la somme de la protéine (P) et du glucide disponible (C) ("F/(P + C)") dans la confiserie cuite est compris de préférence entre 1,8 et 4,0, plus préférablement entre 2,5 et 3,5 et encore plus préférablement entre 3,0 et 3,4.

**9.** Confiserie cuite selon l'une quelconque des revendications 1 à 8, dans laquelle la confiserie cuite est un biscuit ou un beignet cuit.

**10.** Produit alimentaire dans lequel un élément choisi parmi une crème, une confiture, une guimauve et une pâte de haricots est enveloppé par la confiserie cuite selon l'une quelconque des revendications 1 à 9 ou intercalé entre celle-ci.

**11.** Produit alimentaire, dans lequel une surface de la confiserie cuite selon l'une quelconque des revendications 1 à 9 est recouverte ou revêtue d'un élément choisi dans le groupe constitué de chocolat, de sucre, de blanc d'œuf, de sauce de soja et d'huiles et de matières grasses.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009232805 B
- WO 2013186570 A
- JP 2010506587 W
- JP 2008542200 W

**Non-patent literature cited in the description**

- **MUKTI SINGH.** Effect of Flour-Oil Composite as Powdered Fat Source in Low-Fat Cake Mixes. *JOURNAL OF FOOD PROCESSING & TECHNOLOGY,* 01 January 2012, vol. 03 (05